# EUROPÄISCHE PATENTANMELDUNG

(11) **EP 1 050 550 A2**
(43) Veröffentlichungstag der Anmeldung: **08.11.2000**
(21) Anmeldenummer: 00109006.7
(22) Anmeldetag: 26.04.2000
(51) Int. Cl.: C08G 18/08, C08G 18/12, C08G 18/66, C09D 175/04, C08G 18/28

(54) **Urethangruppen enthaltende Polymere**

(30) Priorität: 05.05.1999 DE 19920759
(71) Anmelder: Bayer Aktiengesellschaft, 51368 Leverkusen (DE)
(72) Erfinder: Irle, Christoph, Dr., 47800 Krefeld (DE); Kremer, Wolfgang, 47647 Kerken (DE); Roschu, Rolf, 47877 Willich (DE); Lühmann, Erhard, 51375 Leverkusen (DE)

(57) **Zusammenfassung**

Die Erfindung betrifft Urethangruppen enthaltende Polymere mit Acetalendgruppen, ein Verfahren zu deren Herstellung und ihre Verwendung als Beschichtungsmittel.

## Beschreibung

Die Erfindung betrifft Urethangruppen enthaltende Polymere mit Acetalendgruppen, ein Verfahren zu deren Herstellung und ihre Verwendung als Beschichtungsmittel.

Ein- und zweikomponentige Lacke aus Bindemitteln auf Polyurethanbasis besitzen ein besonders hohes Niveau. Neben den konventionellen, meist in organischen Lösemitteln gelösten Systemen sind besonders wässrige Polyurethan-Dispersionen hervorragend für die Herstellung von Beschichtungen geeignet. Zusätzlich zu einer guten Chemikalienbeständigkeit zeichnen sich Filme aus Polyurethan-Dispersionen durch hochwertige mechanische Eigenschaften und gute Haftung auf vielen Untergründen - z.B. Holz, Metall, Kunststoffe - aus.

Polyurethane werden üblicherweise nach dem Isocyanat-Polyadditionsprozeß hergestellt. Die verschiedenen Möglichkeiten zur Herstellung dieser Bindemittel wurden z.B. von D. Dieterich in einem Übersichtsartikel zusammengefasst [D. Dieterich, Prog. Org. Coatings 9, 281 (1981)].

Um die Beständigkeitseigenschaften von Polyurethan-Dispersionen weiter zu verbessern, wurden bereits verschiedene Möglichkeiten zur chemischen Vernetzung von Filmen aus derartigen Bindemitteln vorgeschlagen.

Ein Überblick über verschiedene Vernetzungsreaktionen bei solchen Polyurethan-Dispersionen wurde z.B. von Rosthauser und Nachtkamp gegeben [J.W. Rosthauser, K. Nachtkamp in: Advances in Urethane Science and Technology", K.C. Frisch, D. Klempner (Hrsg.) Bd. 10, S. 121 - 162 (1987)].

In der DE-A 31 40 873 werden Polyharnstoff-Polyurethandispersionen beschrieben, die durch aus Säurehydraziden und Formaldehyd hergestellte Methylolgruppen terminiert sind und die Bausteine enthalten, die von Melamin abgeleitet sind. Solche Harze weisen den Nachteil auf, dass der zur Herstellung eingesetzte Formaldehyd auch nach Applikation von Lacken noch allmählich freigesetzt werden kann.

Aufgabe der vorliegenden Erfindung war die Bereitstellung von Harzen, die nach Applikation vernetzend sind und dabei keine toxikologisch bedenklichen Substanzen wie Hydrazin oder Formaldehyd freisetzen. Bevorzugt sollten wässrige Lacksysteme mit den genannten Vorteilen gefunden werden.

Gegenstand der Erfindung sind Urethangruppen enthaltende Polymere oder Oligomere, dadurch gekennzeichnet, dass diese 0,1 bis 20 Gew.-% (bezogen auf das Gesamtgewicht des Urethangruppen enthaltenden Polymers) aus der Reaktion von Isocyanatgruppen und Aminobutyraldehyd-diacetalen erhältliche funktionelle Gruppen der Formel (I) 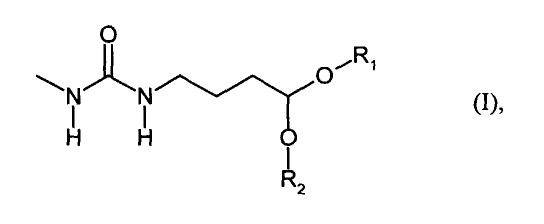 in welcher
R₁ und R₂ jeweils unabhängig voneinander aliphatische oder cycloaliphatische Reste mit 1 bis 12 Kohlenstoffatomen sein können,
aufweisen.

Vorzugsweise befinden sich die Gruppen der Formel (I) endständig.

Überraschenderweise wurde weiterhin gefunden, dass besonders Lacke aus linearen oder schwach verzweigten Polyurethanen bzw. Polyharnstoffpolyurethanen bereits bei niedrigen Anteilen der endständigen funktionellen Gruppen der Formel (I) von 0,1 bis 10 Gew.-%, bevorzugt 0,5 bis 7 Gew.-% (bezogen auf das Gesamtgewicht des Urethangruppen enthaltenden Polymers) deutliche Vorteile gegenüber Harzen ohne funktionelle Gruppen der Formel (I) zeigen. Die erfindungsgemäßen Harze sind bei Raumtemperatur lagerstabil, ohne dass eine Vernetzungsreaktion stattfindet.

Ein weiterer Gegenstand der Erfindung ist auch ein Verfahren zur Herstellung der erfindungsgemäßen Urethangruppen enthaltenden Oligomeren oder Polymeren, dadurch gekennzeichnet, dass ein Isocyanat-terminiertes Polyurethan-Prepolymer einer mittleren Funktionalität von 1,9 bis 2,5 mit einem Aminobutyraldehyddialkylacetal der allgemeinen Formel (II) 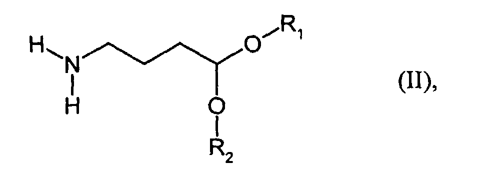 wobei
R₁ und R₂ jeweils unabhängig voneinander aliphatische oder cycloaliphatische Reste mit 1 bis 12 Kohlenstoffatomen sein können,
in einem Gewichtsverhältnis Prepolymer : Verbindung der Formel (II) von 100 : 0,5 bis 100 : 10, sowie gegebenenfalls weiteren isocyanatreaktiven Verbindungen umgesetzt wird.

Die vorzugsweise endständigen erfindungsgemäßen funktionellen Gruppen der Formel (I) sind zugänglich durch Reaktion endständiger Isocyanatgruppen in Poly- oder Oligourethanen mit Aminobutyraldehyd-Diacetalen. Die Verwendung dieser Acetale (geschützten Aldehyde) als Baustein für Bindemittel in Beschichtungssystemen ist bekannt, z.B. aus den US-A 5 298 567, US-A 5 336 807, US-A 5 369 184, US-A 5 369 185, EP-A 617 166, EP-A 738 719, WO 96/29318, WO 97/26303, J. Appl. Polym. Sci. 57, S. 1381 (1995), J. Appl. Polym. Sci. 51, S. 1063 (1995).

Die erfindungsgemäßen Urethangruppen enthaltenden Oligomeren oder Polymeren eignen sich vorzugsweise zur Herstellung von Lacken und wässrigen Dispersionen und Bindemitteln, derartige Lacke und wässrige Dispersionen sind ebenfalls Gegenstand der vorliegenden Erfindung.

Bevorzugte Urethangruppen enthaltende Polymere oder Oligomere gemäß vorliegender Erfindung sind solche, die erhältlich sind durch Umsetzung von
- A1.: 20 bis 75 % Polyisocyanaten,
- A2.: 20 bis 70 % polymeren Polyolen mit mittleren Molgewichten von 400 bis 6000,
- A3.: 0 bis 10 % Monoalkoholen oder Monoaminen,
- A4.: 2 bis 20 % Polyolen, Aminopolyolen oder Polyaminen mit einem Molgewicht unter 400, wobei bevorzugt eines dieser Polyole bzw. Polyamine eine ionische Gruppen enthält oder zur Ausbildung einer ionischen Gruppe befähigt ist, wobei diese ionische Gruppe kationisch oder bevorzugt anionisch sein kann, und der Einbau von Verbindungen dieser Produktklasse mit z.B. freien Carboxygruppen in das Polyurethan bedeutet, dass diese Gruppierungen durch Neutralisation in ionische Gruppen überführt werden können, d.h. sie sind zur Ausbildung einer ionischen Gruppe befähigt, und
- A5.: 0 bis 10 % Polyoxyalkylenether mit mindestens einer Hydroxy- oder Aminogruppe,
dadurch gekennzeichnet, dass, vorzugsweise endständig, 0,1 bis 20 Gew.-% (bezogen auf das Gesamtgewicht des Urethangruppen enthaltenden Polymers) aus der Reaktion von Isocyanatgruppen und Aminobutyraldehyddiacetalen erhältliche funktionelle Gruppen der Formel (I) 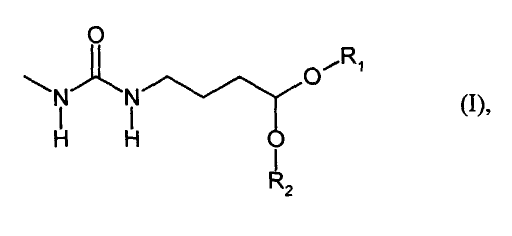 in welcher
R₁ und R₂ jeweils unabhängig voneinander aliphatische oder cycloaliphatische Reste mit 1 bis 12 Kohlenstoffatomen sein können,
enthalten sind.

Die angegebenen %-Werte beziehen sich auf das Gewicht, mit der Maßgabe, dass sich die Summe A1, A2, A3, A4 und A5 zu 100 Gew.-% addieren.

Lacke und wässrige Dispersionen, die diese Polymere oder Oligomere enthalten, sind bevorzugte Ausführungsformen der vorliegenden Erfindung.

Geeignete Polyisocyanate für Komponente A1 sind bevorzugt Diisocyanate der Formel (III)

R₁(NCO)₂ (III),

wobei
- R₁: einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet.

Beispiele derartiger bevorzugt einzusetzender Diisocyanate sind Tetramethylendiisocyanat, Hexamethylendiisocyanat, 4,4'-Diisocyanato-diphenylmethan, 2,4'-Diisocyanato-diphenylmethan, 2,4-Diisocyanatotoluol, 2,6-Diisocyanatotoluol oder α,α,α',α'-Tetramethyl-m- oder p-Xylylendiisocyanat sowie Mischungen der genannten Diisocyanate. Besonders bevorzugte Diisocyanate sind 1-Isocyanato-3,3,5-trimethyl-5-isocyanatomethylcyclohexan (Isophorondiisocyanat) und 4,4'-Diisocyanato-dicyclohexylmethan.

Weiterhin sind als Polyisocyanate A1 solche Polyisocyanate geeignet, die über Isocyanurat-, Biuret-, Allophanat-, Uretdion- oder Carbodiimidgruppen verfügen. Derartige Polyisocyanate können hohe Funktionalitäten, z.B. von mehr als 3, aufweisen. Weitere für die Herstellung der erfindungsgemäßen Polyurethandispersionen geeignete Polyisocyanate sind solche, die über nichtionisch oder ionisch hydrophile Aufbaukomponenten verfügen und z.B. als Vernetzer in wässrigen 2K-PUR-Lacken eingesetzt werden können.

Die polymeren Polyole A2 in dem Molgewichtsbereich von 400 bis 6000 sind die üblichen wie sie für Polyurethane bereits seit langem eingesetzt werden, mit einer OH-Funktionalität von mindestens 1,8 bis ca. 4 wie z.B. Polyester, Polyether, Polycarbonate, Polyestercarbonate, Polyacetale, Polyolefine und Polysiloxane. Bevorzugt verwendet werden Polyole in einem Molgewichtsbereich von 600 bis 2500 mit einer OH-Funktionalität von 2 bis 3.

Neben dem Einsatz difunktioneller OH-Komponenten kommt, wie aus der Literatur bekannt, auch die Terminierung des Polyurethan-Prepolymers mit einem monofunktionellen Alkohol in Betracht. Geeignete Monoalkohole A3 sind bevorzugt aliphatische Monoalkohole mit 1 bis 18 C-Atomen wie z.B. Ethanol, n-Butanol, Ethylenglykol-monobutylether, 2-Ethylhexanol, 1-Octanol, 1-Dodecanol, 1-Hexadecanol und/oder OH- und/oder NH-funktionelle Polyether.

Polyole, Aminopolyole oder Polyamine mit einem Molgewicht unter 400, die als Kettenverlängerer in Polyurethanen bzw. Polyurethan-Dispersionen erfindungsgemäß Verwendung finden können, sind in der entsprechenden Literatur ebenfalls in großer Zahl beschrieben. Als Beispiel seien genannt: Ethandiol, 1,4-Butandiol, Cyclohexandimethanol, Trimethylolpropan, Glycerin sowie Hydrazin, Ethylendiamin, 1,4-Diaminobutan, Isophorondiamin und 4,4-Diaminodicyclohexylmethan.

Die OH-Komponenten A2, A3 und A4 können Doppelbindungen enthalten, die z.B. aus langkettigen aliphatischen Carbonsäuren oder Fettalkoholen stammen können. Eine Funktionalisierung mit olefinischen Doppelbindungen ist z.B. möglich durch den Einbau allylischer Gruppen oder von Acrylsäure oder Methacrylsäure sowie deren jeweiligen Estern.

Niedermolekulare Polyole, die zur Ausbildung einer ionischen Gruppe befähigt sind, sind z.B. Dimethylolpropionsäure und N-Methyl-diethanolamin.

Neben Polyolen bzw. Polyaminen enthalten die erfindungsgemäßen Polyurethandispersionen bevorzugt auch Polyoxyalkylenether A5, die pro Molekül mindestens eine Hydroxy- oder Aminogruppe tragen und z.B. aus einem Alkohol und aus Polyethylenoxid-/Polypropylenoxidblöcken bestehen mit einem Molgewicht von 250 bis etwa 3000. Es ist bekannt, dass die Substanzen Hydrophilieträger sind und die Dispergierung des PUR sowie pH-Stabilität und Scherstabilität in Wasser verbessern.

Die Herstellung der erfindungsgemäßen wässrigen PUR-Dispersionen erfolgt in der bekannten üblichen Art: Man lässt die Polyisocyanatkomponente mit polymerem Polyol und niedermolekularen Kettenverlängerern zu einem Polyurethan ausreagieren, wobei gegebenenfalls und vorteilhaft ein Lösungsmittel mitverwendet wird, das später gegebenenfalls wieder abgetrennt werden kann. Es können die zur Herstellung von Polyurethan-Dispersionen üblicherweise verwendeten, nicht-isocyanatreaktiven Lösemittel wie z. B. Aceton, Methylethylketon, N-Methylpyrrolidon, Dipropylenglykol-dimethylether, Methoxybutylacetat oder Methoxypropylacetat verwendet werden.

In einem weiteren Schritt werden anschließend zur Neutralisation befähigte Gruppen in die Salzform überführt und mit Wasser die Dispersion erzeugt. Je nach Neutralisationsgrad kann die Dispersion sehr feinteilig eingestellt werden, so dass sie praktisch das Aussehen einer Lösung hat, aber auch sehr grobteilige Einstellungen sind möglich, die ebenfalls ausreichend stabil sind. Auch der Feststoffgehalt kann in weiten Grenzen von z.B. 20 bis 50 Gew.-% variiert werden.

Die endständigen funktionellen Gruppen der Formel (I) werden durch Umsetzung von Isocyanatgruppen mit Aminobutyraldehyd-Dialkylacetalen eingeführt. Geeignete Alkylreste R₁ und R₂ sind solche mit Kettenlängen von 1 bis 12 C-Atomen, bevorzugt 1 bis 4 C-Atomen.

Die Umsetzung endständiger Isocyanatgruppen mit Aminobutyraldehyd-diacetal kann vor, während oder nach der Dispergierung erfolgen. Dabei werden pro mol Isocyanat 0,1 bis 1 mol Aminobutyraldehyd-diacetal zur Reaktion gebracht. Überschüssige Isocyanatgruppen werden dann durch Umsetzung mit polyfunktionellen isocyanatreaktiven Verbindungen zur Reaktion gebracht (Kettenverlängerung). Hierzu werden bevorzugt Wasser oder Polyamine, besonders bevorzugt Di- sowie Triamine und Hydrazin eingesetzt. Auch die Terminierung mit einem Monoamin wie z.B. Diethylamin, Dibutylamin, Ethanolamin, N-Methylethanolamin oder N,N-Diethanolamin ist möglich.

Die erfindungsgemäßen Polyurethandispersionen werden bevorzugt als Bindemittel in Beschichtungen und Klebstoffen verwendet. Dabei werden die erfindungsgemäßen Polyurethandispersionen entweder allein oder in Kombination mit anderen, bevorzugt hydroxy- oder aminofunktionellen wässrigen Bindemitteln eingesetzt. Solche wässrigen Bindemittel können z.B. aus Polyester-, Polyacrylat-, Polyepoxid- oder Polyurethanpolymeren mit Hydroxy- oder Aminogruppen aufgebaut sein. Auch die Kombination mit weiteren Bindemitteln, die keine Hydroxy- oder Aminogruppen enthalten, ist möglich. Als Beispiel seien genannt: Polyacrylat- oder Polyacrylat-Polystyrol-Emulsionspolymerisate oder strahlenhärthare Bindemittel.

Bevorzugt werden Kombinationen aus 0,1 bis 95 Gew.-% eines hydroxy- und/oder carboxyfunktionellen Polyurethan-, Polyacrylat-, Polyester-, Polyepoxid-, Polyolefin-, Polyamid-, Polyester-Polyacrylat- oder Alkydharz-Bindemittels und 5 bis 99,9 Gew.-% einer erfindungsgemäßen Polyurethandispersion eingesetzt.

Bevorzugte Substrate für die Beschichtung sind Holz, Metall, Kunststoff, Leder, Textil, Glas, Glasfasern und mineralischen Untergründen sowie die Verwendung bei der Herstellung und Beschichtung von Papier und Holzwerkstoffen.

Bei erhöhter Temperatur und/oder der Einwirkung von Katalysatoren erfolgt die Vernetzungsreaktion. Geeignete Katalysatoren reagieren in Wasser sauer und bestehen z.B. aus Übergangsmetallsalzen, organischen Säuren oder Mineralsäuren. Besonders geeignet sind Schwefelsäure und p-Toluolsulfonsäure.

### Beispiele

### Verwendete Abkürzungen:

- ABAA-Me:: Aminobutyraldehyd-dimethylacetal (Air Products Inc.)
- ABAA-Et:: Aminobutyraldehyd-diethylacetal (Air Products Inc.)
- IPDI:: Isophorondiisocyanat (1-Isocyanato-3,3,5-trimethyl-5-isocyanatomethylcyclohexan)
- DMPS:: Dimethylolpropionsäure
- NMP:: N-Methylpyrrolidon
- EDA:: Ethylendiamin
- HH:: Hydrazinhydrat
- LKS: : Laserkorrelationsspektroskopie

### Beispiel A

In einem 2 l-Dreihalskolben mit Rückflußkühler, Innenthermometer und Rührer werden 525,0 g eines Polyesters aus Adipinsäure und Hexandiol (OH-Zahl 70 mg KOH/g, Säurezahl 0,9 mg KOH/g), 124,3g 1,6-Hexandiol, 44,9 g Dimethylolpropionsäure und 183,6 g N-Methylpyrrolidon vorgelegt. Durch Erhitzen auf 70°C wird eine klare Lösung hergestellt. Anschließend werden 535,0 g IPDI zugefügt und der Ansatz auf 80°C erhitzt. Bei dieser Temperatur wird solange gerührt, bis der Isocyanatgehalt der so hergestellten Prepolymerlösung 4,0 % beträgt. Nun kühlt man auf 70°C ab und gibt 33,8 g Triethylamin zu.

### Beispiel B1 - B6 Dispergierung, Kettenverlängerung, Funktionalisierung

In einem zweiten 2 l-Dreihalskolben mit Innenthermometer und Rührer werden die in Tabelle 1 angegebenen Mengen an Wasser ("Wasservorlage") bei 40°C vorgelegt. Dann werden 1200 g des Prepolymers aus Beispiel A so unter kräftigem Rühren zugegeben, dass die Temperatur 40°C nicht übersteigt. Hierzu wird mit einem Wasser/Eisbad gekühlt. Die Dispersion wird auf 20°C abgekühlt und innerhalb von 15 min die in Tabelle 1 angegebenen Mengen an Wasser und Hydrazinhydrat (als 8 Gew.-%ige Lösung in Wasser) zugegeben. anschließend wird jeweils in 30 min die in Tabelle 1 angegebene Menge EDA, ABAA-Me und ABAA-Et und Wasser zugegeben. Bei 30°C wird die Dispersion dann gerührt, bis infrarotspektroskopisch kein Isocyanat mehr nachweisbar ist.

**Tabelle 1**

| Einsatzmengen bei der Umsetzung der Prepolymer-Dispersionen zu den Beispiel-Dispersionen B1 bis B6 | | | | | | |
|---|---|---|---|---|---|---|
| | B1 | B2 | B3 | B4 | B5 | B6 |
| | Vergleich | | | | | |
| | Einwaage/g | | | | | |
| Wasservorlage | 1597 | 1683 | 1680 | 1800 | 1758,2 | 1672 |
| HH | 5,8 | 5,8 | 5,8 | - | - | - |
| EDA | 20,7 | 9,0 | 6,5 | - | - | 15,9 |
| ABAA-Me | - | 63,0 | - | 148,5 | - | 63,0 |
| ABAA-Et | - | - | 63,0 | - | 122,8 | - |
| Wasser | 100 | 110 | 110 | 200 | 195 | 200 |

Die so erhaltenen, ca. 35 Gew.-%igen Polyurethandispersionen weisen folgende mittlere Teilchengrößen (MTG) auf:

| | B1 | B2 | B3 | B4 | B5 | B6 |
|---|---|---|---|---|---|---|
| MTG (LKS) nm | 68 | 65 | 62 | 76 | 52 | 61 |

Von den Polyurethandispersionen B1, B2 und B3 werden Filme mit einer Naßfilmschichtdicke von 210 µm auf Glasplatten aufgezogen und ohne Zugabe von Additiven bzw. eines Katalysators 1 h bei 160°C eingebrannt. Anschließend wird durch Auflegen eines mit Ethanol-Wasser (1:1) getränkten Wattebausches die Beständigkeit nach einer Einwirkzeit von 5 bzw. 30 min bestimmt. Dabei werden folgende Ergebnisse gefunden (0: keine Beschädigung, 4: starke Beschädigung, Film aufgelöst):

| | B1 | B2 | B3 |
|---|---|---|---|
| nach 5 min | 3 | 1 | 1 |
| nach 30 min | 4 | 2 | 2 |

Die Prüfergebnisse bestätigen, dass durch den Einbau der Acetalendgruppen eine deutliche Verbesserung der Beständigkeitseigenschaften erzielt wird.

## Patentansprüche

1. Urethangruppen enthaltende Oligo- und Polymere, dadurch gekennzeichnet, dass sie 0,1 bis 20 Gew.-% funktioneller Gruppen der Formel (I) 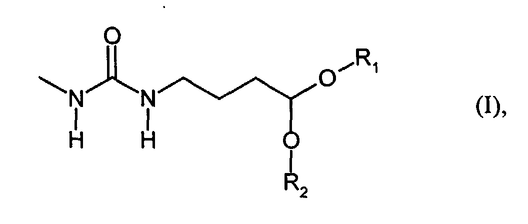 in welcher
R₁ und R₂ jeweils unabhängig voneinander aliphatische oder cycloaliphatische Reste mit 1 bis 12 Kohlenstoffatomen sein können,
enthalten.

2. Urethangruppen enthaltende Oligo- und Polymere gemäß Anspruch 1, die erhältlich sind durch Umsetzung von
A1. 20 bis 75 % Polyisocyanaten,
A2. 20 bis 70 % polymeren Polyolen mit mittleren Molgewichten von 400 bis 6000,
A3. 0 bis 10 % Monoalkoholen oder Monoaminen,
A4. 2 bis 20 % Polyolen, Aminopolyolen oder Polyaminen mit einem Molgewicht unter 400, wobei bevorzugt eines dieser Polyole bzw. Polyamine eine ionische Gruppen enthält oder zur Ausbildung einer ionischen Gruppe befähigt ist und
A5. 0 bis 10 % Polyoxyalkylenether mit mindestens einer Hydroxy- oder Aminogruppe,
dadurch gekennzeichnet, dass diese, vorzugsweise endständig, 0,1 bis 20 Gew.-% (bezogen auf das Gesamtgewicht des Urethangruppen enthaltenden Polymers) aus der Reaktion von Isocyanatgruppen und Aminobutyraldehyd-diacetalen erhältliche funktionelle Gruppen der Formel (I) 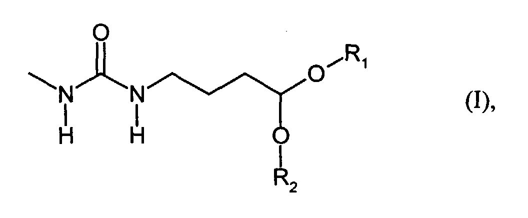 in welcher
R₁ und R₂ jeweils unabhängig voneinander aliphatische oder cycloaliphatische Reste mit 1 bis 12 Kohlenstoffatomen sein können, enthalten,
mit der Maßgabe, dass sich die Summe A1, A2, A3, A4 und A5 zu 100 Gew.-% addieren.

3. Urethangruppen enthaltende Oligo- und Polymere gemäß Ansprüchen 1 und 2, dadurch gekennzeichnet, dass R₁ und R₂ gleich sind und jeweils für einen C₁- bis C₄-Alkylrest stehen.

4. Urethangruppen enthaltende Oligo- und Polymere gemäß Ansprüchen 1 bis 3, dadurch gekennzeichnet, dass R₁ und R₂ gleich sind und jeweils für eine Methylgruppe oder eine Ethylgruppe stehen.

5. Dispersionen enthaltend Urethangruppen enthaltende Oligo- und Polymere gemäß Ansprüchen 1 bis 4.

6. Verfahren zur Herstellung von Urethangruppen enthaltenden Oligo- und Polymeren, dadurch gekennzeichnet, dass ein Isocyanat-terminiertes Polyurethan-Prepolymer einer mittleren Funktionalität von 1,9 bis 2,5 mit einem Aminobutyraldehyddialkyacetal der allgemeinen Formel (II) 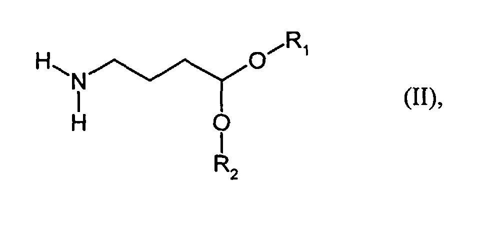 wobei
R₁ und R₂ jeweils unabhängig voneinander aliphatische oder cycloaliphatische Reste mit 1 bis 12 Kohlenstoffatomen sein können,
in einem Gewichtsverhältnis Prepolymer : Verbindungen der Formel (II) von 100 : 0,5 bis 100 : 10, sowie gegebenenfalls weiteren isocyanatreaktiven Verbindungen umgesetzt wird.

7. Verwendung eines Urethangruppen enthaltenden Oligo- oder Polymeren gemäß Ansprüchen 1 bis 4 als Bindemittel.

8. Verwendung eines Urethangruppen enthaltenden Oligo- oder Polymeren gemäß Ansprüchen 1 bis 4 in Klebstoffen.

9. Verwendung gemäß Ansprüchen 7 und 8 in Kombination mit mindestens einem Polyurethan-, Polyacrylat-, Polyester-, Polyepoxid-, Polyolefin-, Polyamid-, Polyester-Polyacrylat- oder Alkydharz-Bindemittel.

10. Verwendung gemäß Ansprüchen 7 bis 9 in Kombination aus 0,1 bis 95 Gew.-% eines hydroxy- und/oder carboxyfunktionellen Polyurethan-, Polyacrylat-, Polyester-, Polyepoxid-, Polyolefin-, Polyamid-, Polyester-Polyacrylat- oder Alkydharz-Bindemittels und 5 bis 99,9 Gew.-% einer Polyurethandispersion gemäß Anspruch 5.

11. Verwendung gemäß Ansprüchen 7 bis 10 auf Holz, Metall, Kunststoff, Leder, Textil, Glas, Glasfasern und mineralischen Untergründen sowie bei der Herstellung und Beschichtung von Papier und Holzwerkstoffen.

12. Substrate beschichtet mit Urethangruppen enthaltenden Oligo- oder Polymeren gemäß Ansprüchen 1 bis 4.
